# EUROPEAN PATENT APPLICATION

(11) **EP 0 521 831 A1**
(43) Date of publication of application: **07.01.1993**
(21) Application number: 92830327.0
(22) Date of filing: 23.06.1992
(51) Int. Cl.: B60S 1/08

(54) **A reciprocating drive device, particularly for the wiper arm for the rear window of a motor vehicle**

(30) Priority: 03.07.1991 IT TO910514
(71) Applicant: INDUSTRIE MAGNETI MARELLI S.p.A., I-20128 Milano (IT)
(72) Inventor: Asero, Roberto, I-20148 Milano (IT); Defilippis, Pietro, I-20128 Milano (IT)
(74) Representative: Quinterno, Giuseppe

(57) **Abstract**

The device includes an inverter (13) which is driven by a control device (15) at a frequency corresponding to the predetermined time needed for an outward or return stroke of the driven member (64), in order to change the polarity of the voltage applied to the motor (M) by means of an electromechanical device (C′) which includes sliding contacts (20 to 23) which cooperate with electrically-conductive surfaces (S′1 - S′3) on a member (61) which is movable as a result of the operation of the motor (M). Only two wires (12) are needed to connect the inverter to the unit formed by the motor (M) and the electromechanical device.

## Description

The present invention relates to a reciprocating drive device, particularly for driving a wiper arm for the rear window of a motor vehicle.

Known reciprocating drive devices for front and rear windscreen wipers of a motor vehicle include direct-current electric motors which are always rotated in the same sense. In such a device, the rotary motion of the shaft of the electric motor is converted into a reciprocating motion by a kinematic mechanism which typically includes connecting rods and cranks. These devices are complex, heavy and quite bulky.

An object of the present invention is to provide a drive device in which the reciprocating rotary motion of an output shaft is achieved electrically rather than mechanically, without the need to use any of the kinematic mechanisms used in conventional devices, and which requires a minimal number of electrical connecting wires.

According to the invention, this object is achieved by means of a reciprocating drive device, particularly for a wiper arm, including in combination:
- a support structure,
- an output shaft which is rotatable relative to the structure and to which a wiper arm can be connected,
- a direct-current electric motor for rotating the shaft,
- first and second supply terminals, of which the first is connected to a first terminal of the electric motor,
- an inverter which can assume a first condition in which it connects the first and second supply terminals to the positive and negative poles of a direct-current voltage supply, respectively, and a second condition in which it connects the first and second terminals to the negative and positive poles of the supply, respectively,
- an electromechanical device for controlling the supply to the engine, including:
   a member which is movable relative to the structure and is kinematically connected to the shaft so that, when the motor rotates in one sense or the other, the member moves relative to the structure in one sense or the other in order alternately to perform outward and return strokes, the member carrying a main electrically-conductive surface and first and second auxiliary electrically-conductive surfaces, each of which is physically separate from the main surface and electrically connected thereto by a unidirectional conductor,
   first and second main sliding contacts which are carried by the structure and are in contact with the member, which are connected to the second terminal of the motor and to the second supply terminal respectively, and which can cooperate with the main electrically-conductive surface and the auxiliary electrically-conductive surfaces in order to enable current to be supplied to the motor during each outward and return stroke of the member and to cut off the supply of current to the motor near the end of each stroke, and
   first and second auxiliary sliding contacts, which are carried by the structure and are in contact with the member, which are connected to the first terminal of the motor by unidirectional conductors, and which can cooperate with the first and second auxiliary electrically-conductive surfaces respectively, in order to brake the motor by short-circuiting it at the end of each stroke of the member, and
- a control device for switching the inverter between its first and second conditions at a predetermined frequency.

Further characteristics and advantages of the drive device according to the invention will become clear from the detailed description which follows with reference to the appended drawings, provided purely by way of non-limiting example, in which:
Figure 1 is a schematic illustration of a device according to the invention,
Figure 2 is a partially-sectioned front view of an embodiment of the device according to the invention,
Figure 3 is a section taken on the line III-III of Figure 2, and
Figure 4 is a schematic illustration showing a variant of the device according to the invention, shown in Figure 1.

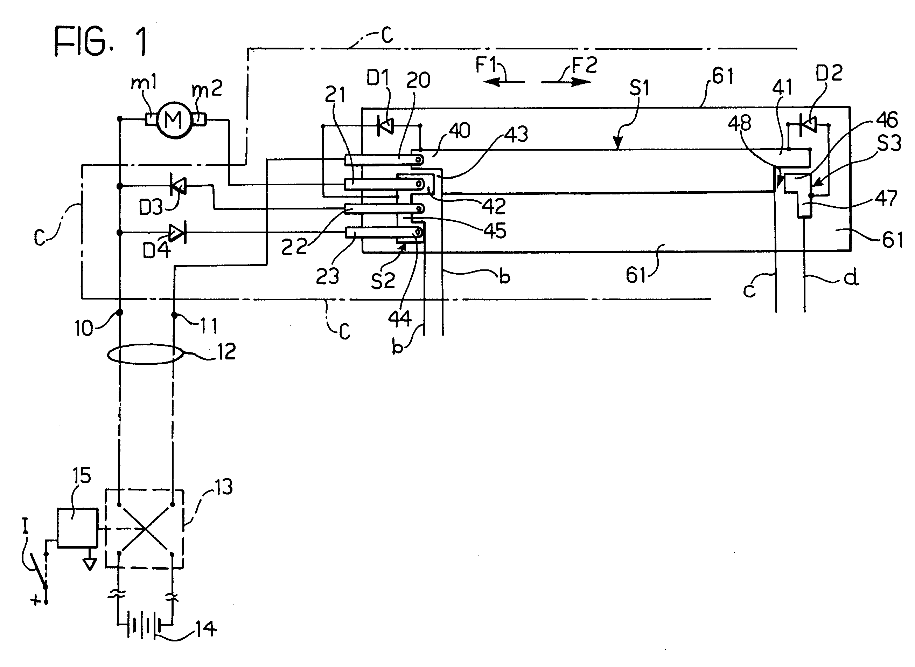

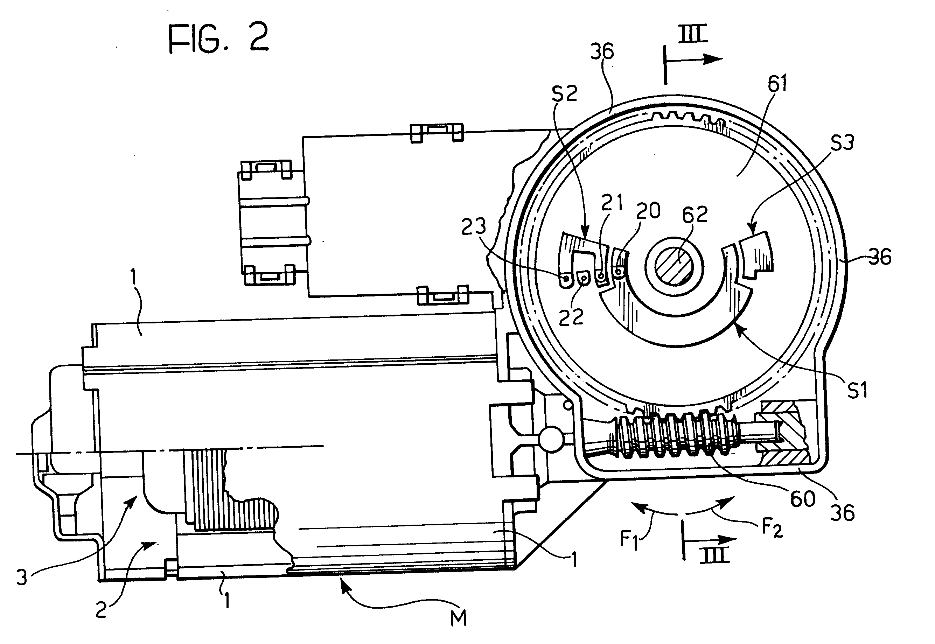

With reference to Figure 1, a device according to the invention includes a direct-current electric motor with permanent magnets. The motor, indicated M in Figures 1 and 2, includes, in known manner, a casing 1, a stator 2 with permanent magnets, and a rotor 3 (Figure 2).

With reference again to Figure 1, the motor M has a first brush m1 which is connected to the first of two supply terminals, indicated 10 and 11.

A bifilar connection 12 connects the supply terminals to the output side of an inverter 13, the input side of which is connected to a direct-current voltage supply 14, such as the battery of a motor vehicle. The inverter 13, which is of known type, can assume a first condition in which it connects the terminals 10 and 11 to the positive and negative poles of the supply 14, respectively, and a second condition in which it connects the supply terminals 10, 11 to the negative and positive poles of the supply, respectively.

A control device 15 can switch the inverter 13 at a predetermined frequency when a manual control switch I is closed.

An electromechanical device for controlling the supply to the motor M is indicated C. This device is connected electrically to the brushes of the motor M and to the supply terminals 10 and 11.

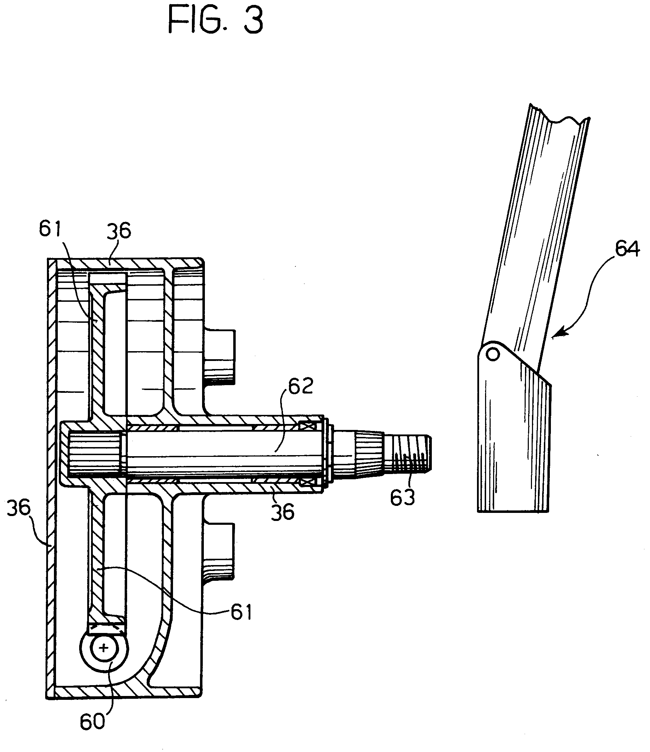

With reference to Figures 2 and 3, the electromechanical device for controlling the supply to the motor includes a disc-shaped member 61 which is rotatable in a support casing 36 fixed to the casing 1 of the electric motor M. A worm screw 60 connected to the shaft of the motor meshes, within the casing 36, with outer teeth on the disc-shaped member 61. A shaft (indicated 62 in Figure 3) fixed to the centre of the disc 61 constitutes the output shaft of the drive device as a whole. One end 63 of the shaft projects from the support casing 36 and a wiper arm 64 (shown partially in Figure 3), which can be used, for example, to wipe the rear window of a motor vehicle, can be connected thereto in known manner.

Conveniently, the disc-shaped element 61 is made of an electrically-insulating material and one of its faces has metallised portions which define a main electrically-conductive surface S1 and two auxiliary electrically-conductive surfaces S2 and S3 (Figure 2).

For simplicity, the face of the disc 61 which carries the electrically-conductive surfaces is shown as a linear development, and is thus substantially rectangular, in Figure 1.

Similarly, the electrically-conductive surfaces S1, S2 and S3, which are actually arcuate, are represented linearly in Figure 1.

In Figures 1 and 2, four contact members, indicated 20 to 23, have respective first ends which are fixed (in known manner, not shown) to the support casing 36, their other ends being in frontal contact with the surface of the member 61.

The sliding contacts 20 and 21, which will be referred to below as the main contacts, are connected respectively to the supply terminal 11 and to the brush m2 of the electric motor M.

The sliding contacts 22 and 23, which are referred to below as the auxiliary contacts, are connected to the supply terminal 10 and to the brush m1 of the motor M by means of respective diodes D3 and D4. In particular, the anode of the diode D3 is connected to the fixed contact 22 and its cathode is connected to the supply terminal 10. The anode of the diode D4 is connected to the supply terminal 10 and its cathode is connected to the sliding contact 23.

With reference to the embodiment shown in Figure 2, when the motor M is activated, it may rotate the disc 61 in the sense indicated by the the arrow F1 or in the sense indicated by the arrow F2, according to the polarity of the voltage applied thereto.

With reference to the diagram of Figure 1, translations of the rectangular element 61 in the directions indicated by the arrows, which are again indicated F1 and F2 respectively in Figure 1, correspond to the rotations of the disc 61 of Figure 2.

The geometrical characteristics of the electrically-conductive surfaces S1, S2 and S3 will now be described with reference to Figure 1. Naturally, these considerations apply, with necessary changes, to the electrically-conductive surfaces of the embodiment shown in Figure 2.

The surface S1 is elongate and has two end extensions 40 and 41. The extensions are in positions such that they can be engaged solely by the sliding contact 20 whereas the rest of the surface S1 can be engaged by both the sliding contacts 20 and 21.

In the embodiment of Figure 1, the auxiliary electrically-conductive surface S2 is substantially C-shaped and has a side arm 42 which is adjacent the extension 40 of the surface S1 so as to be engaged solely by the sliding contact 21. Between the ends of the arm 42 of S2 and S1, there is a narrow space 43 large enough to ensure electrical insulation between S′1 and S′1 but preferably smaller than the effective contact area of the sliding contact 21.

The electrically-conductive surface S2 also has a second, shorter arm, indicated 44, which is parallel to the arm 42. The arm 44 is positioned so that it can be engaged solely by the sliding contact 23.

The arms 42 and 44 of the surface S2 are joined by a transverse arm 45 which has the function of connecting the side arms but is not intended to be engaged by a sliding contact.

The electrically-conductive surface S3 is shaped substantially like an inverted L, having an arm 46 for engagement by the sliding contact 21 and an arm 47 for engagement by the sliding contact 22.

The arm 46 of S3 is separated from S1 by a narrow space 48 which is wide enough to ensure the insulation of S′1 and S′3 but is preferably smaller than the effective contact area of the sliding contact 21.

Two semiconductor diodes carried by the element 61 are indicated D1 and D2. The anode of the diode D1 is connected to S1 and its cathode is connected to S2, and the anode of the diode D2 is connected to S3 and its cathode to S1.

In the deactivated, rest condition, the device described above adopts the configuration shown in Figure 1 (position a). In this condition, the main sliding contacts 20 and 21 engage the appendage 40 of S1 and the side arm 42 of S2, respectively. The sliding contact 22 touches the surface of the movable element 61 without engaging an electrically-conductive surface, and the sliding contact 23 engages the arm 44 of S2.

When the switch I with two sections is closed, the supply 14 is connected to the inverter 13 and the control device 15 arranges the inverter in one of its possible conditions described above. If the inverter 13 connects the positive pole of the supply 14 to the supply terminal 11 and its negative pole to the supply terminal 10, as shown in Figure 1, the motor M is activated as a result of the passage of a current through the sliding contact 20, the surface S1, the diode D1, the surface S2, the sliding contact 21 and then through the motor M.

The operation of the motor M moves the wiper arm 64 and the member 61 associated therewith in the direction indicated by the arrow F1. After it has performed a certain movement in this direction, the sliding contacts reach the positions, relative to the member 61, corresponding to the line b in Figure 1; the sliding contact 20 continues to engage S1 but the contact 21, which has left the arm 42 of S2, also touches S1. In this condition, the motor continues to be rotated, still in the original sense, as a result of the passage of the current through the sliding contact 20, the surface S1, the contact 21 and then through the motor M. The wiper arm 64 continues to move in the original sense. The member 61 continues to move in the direction indicated by the arrow F1.

The wiper arm and the member 61 continue to move until the sliding contacts reach the position indicated c in Figure 1, relative to the member 61.

When the sliding contacts 20 to 23 are between the positions indicated c and d in Figure 1, relative to the member 61, the contact 20 continues to engage S1 but the contact 21 leaves S1 and is brought into contact with the arm 46 of S3. At this stage, the supply of current to the motor M is cut off. The motor is thus cut off but continues to rotate by inertia.

As soon as the sliding contact 22 engages the arm 47 of S3, the motor M is short-circuited by means of the conductive path including the sliding contact 21, S3, the contact 22 and the diode D3. The motor M is thus braked abruptly.

Conveniently, the control device 15 is arranged to reverse the connections between the supply terminals 10 and 11 and the poles of the supply 14 at this point. For this purpose, the switching frequency of the inverter 13 must correspond to a period substantially equal to the time needed for the member 61 to perform an outward or return stroke, the outward stroke corresponding to the distance the member has to travel in order for the sliding contacts 20 and 23 to move from the position indicated a in Figure 1 to the position indicated d. As will become clearer from the following, the device can nevertheless operate if the switching frequency of the inverter 13 corresponds to a period shorter than the nominal time needed for an outward or return stroke of the member 61 and for the wiper arm 64 to pivot through the whole of the predetermined wiping angle.

If, at the end of the outward stroke of the member 61, the supply terminals 10 and 11 are connected respectively to the positive and negative poles of the supply 14 the flow of current through the motor, the sliding contact 21, the electrically-conductive surface S3, the diode D2, the surface S1, the sliding contact 20 and the supply terminal 11 causes the motor M to rotate in the opposite sense from that in which it rotated previously.

The movable contact 61 thus starts its return stroke, moving in the direction indicated by the arrow F2.

When the sliding contact 21 is disengaged from the electrically-conductive surface S3 and engages the surface S1, the motor M continues to rotate in the same sense. In fact, the current can flow from the input terminal 10 to the terminal 11 through the motor M, the sliding contact 21, the surface S1 and the sliding contact 20.

The wiper arm and the member 61 continue to move in the direction indicated by the arrow F2 until the sliding contact 21 leaves S1 and comes into contact with the arm 42 of S2. In this condition, the supply of current to the motor M is cut off. Immediately afterwards, as soon as the sliding contact 23 engages S2, the motor M is short-circuited through the conductive path including D4, the sliding contact 23, the surface S2 and the sliding contact 21. The motor M is braked abruptly.

At this point, if the two sections of the switch I are still closed, the device 15 switches the inverter 13 again and the device continues to operate in the manner described above.

If, in operation, the inverter 13 were switched for any reason whilst the sliding contacts were between the positions indicated b and c in Figure 1, relative to the member 61, the polarity of the voltage applied to the motor M would be inverted abruptly, thus reversing the movement of the arm and of the movable member 61. As disclosed above, the device can therefore operate even if the switching frequency of the inverter 13 corresponds to a period shorter than the nominal time needed for an outward or return stroke of the member 61 and for the arm 64 to pivot through the entire predetermined wiping angle.

The device described above may conveniently be used for driving the wiper arm associated with the rear window of a motor vehicle. For this purpose, the inverter 13 and the control device 15 may conveniently be located in the front portion of the vehicle, for example, near the dashboard, and may be connected to the rest of the device, that is, to the electromechanical device C and to the motor M by means of only two connecting wires, that is, by the bifilar connection indicated 12 in Figure 1. This characteristic is particularly convenient.

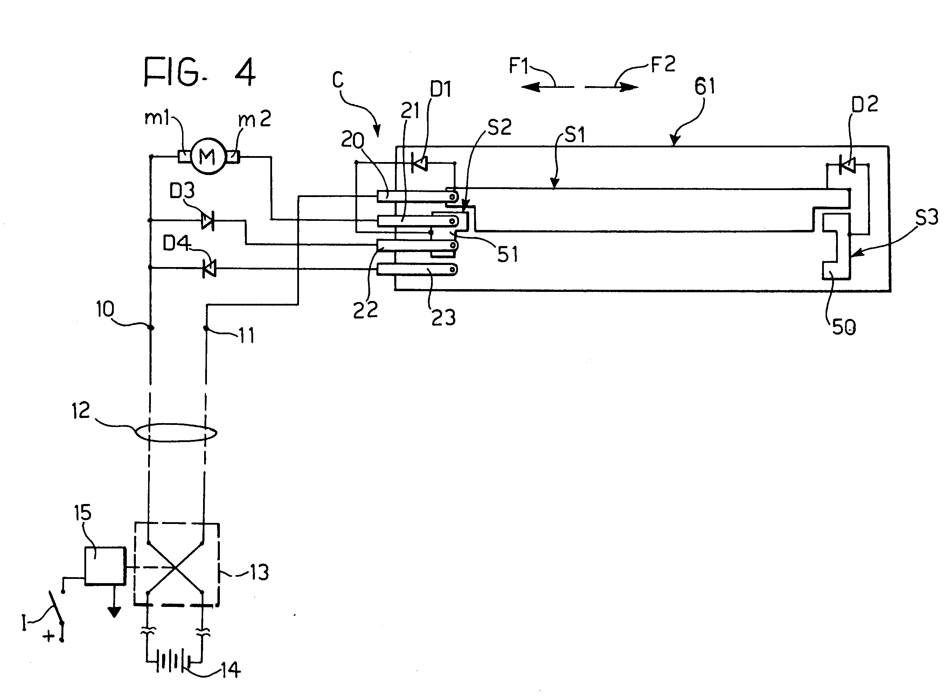

Figure 4 of the appended drawings shows a variant in which the surface S2 is substantially L-shaped and the surface S3 is substantially C-shaped. In this case, the short-circuiting and braking of the motor M are achieved at one end of the stroke by the engagement of the sliding contact 23 on the arm of S3 which is indicated 50 in Figure 4.

The short-circuiting and braking of M at the other end of the stroke of the member 61, however, are achieved by the engagement of the sliding contact 23 on the arm of S2 indicated 51 in Figure 4. The connection of the diodes D3 and D4 is correspondingly the reverse of that of the diagram of Figure 1.

The operation of the device shown schematically in Figure 4 is exactly the same as that of the device of Figure 1 and will not therefore be described further.

Naturally, the principle of the invention remaining the same, the forms of embodiment and details of construction may be varied widely with respect to those described and illustrated purely by way of non-limiting example, without thereby departing from the scope of the present invention.

## Claims

1. A reciprocating drive device, particularly for the wiper arm (64) for the rear window of a motor vehicle, including:
- a support structure (1, 36),
- an output shaft (62, 63) which is rotatable relative to the structure (1, 36) and to which a wiper arm (64) can be connected,
- a direct-current electric motor (M) for rotating the shaft (62, 63),
- first and second supply terminals (10, 11), of which the first (10) is connected permanently to a terminal (m1) of the electric motor (M),
- an inverter (13) which can assume a first condition in which it connects the first and second supply terminals (10, 11) to the positive and negative poles of a direct-current voltage supply (14), respectively, and a second condition in which it connects the first and second terminals (10, 11) to the negative and positive poles of the supply (14), respectively,
- an electromechanical device (C) for controlling the supply to the motor (M), including,
a member (61) which is movable relative to the structure (1, 36) and is kinematically connected to the shaft (62, 63) so that, when the motor (M) rotates in one sense or the other, the member (61) moves relative to the structure (1, 36) in one sense (F1) or the other sense (F2) in order alternately to perform outward and return strokes, the member (61) carrying a main electrically-conductive surface (S1) and first and second auxiliary electrically-conductive surfaces (S2, S3), each of which is physically separate from the main surface (S1) and electrically connected thereto by a unidirectional conductor (D1, D2),
first and second main sliding contacts (20, 21) which are carried by the structure (36) and are in frontal contact with the member (61), which are connected to the second supply terminal (11) and to the second terminal (m2) of the motor (M), respectively, and which can cooperate with the main electrically-conductive surface (S1) and the auxiliary electrically-conductive surfaces (S2, S3) in order to control the supply of current to the motor (M) during each outward and return stroke of the member (61), and to cut off the supply of current to the motor (M) near the end of each stroke, and
first and second auxiliary sliding contacts (22, 23), which are carried by the structure (36) and are in frontal contact with the member (61), which are connected to the first terminal (m1) of the motor (M) by unidirectional conductors (D3, D4), and which can cooperate with the first and second auxiliary electrically-conductive surfaces (S2, S3) respectively in order to brake the motor (M) by short-circuiting it at the end of each stroke of the member (61), and
- a control device (15) for switching the inverter (13) between its first and second conditions at a predetermined frequency.

2. A device according to Claim 1, characterised in that there is a connection with only two leads between the inverter (13) and the electromechanical device (C′) which controls the supply to the motor (M).

3. A device according to Claim 1, characterised in that the control device (15) is arranged to switch the inverter (13) between its first and second conditions at a frequency which corresponds to a period equal to or greater than the nominal time necessary for the member (61) to perform an outward or return stroke corresponding to the predetermined wiping angle of the wiper arm (64).
